# EUROPÄISCHE PATENTSCHRIFT

(11) **EP 2 264 726 B1**
(45) Veröffentlichungstag und Bekanntmachung des Hinweises auf die Patenterteilung: **10.09.2014**
(21) Anmeldenummer: 10176866.1
(22) Anmeldetag: 25.04.2006
(51) Int. Cl.: H01G 4/224, H01G 4/236, H01G 4/38, H01G 9/008, H01G 9/10

(54) **KONDENSATOR**
CAPACITOR
CONDENSATEUR

(30) Priorität: 02.05.2005 DE 102005020320; 05.07.2005 DE 102005031366
(43) Veröffentlichungstag der Anmeldung: 22.12.2010
(62) Teilanmeldung aus: 06742259.2
(73) Patentinhaber: EPCOS AG, 81669 München (DE)
(72) Erfinder: Grimm, Wilhelm, 91154 Roth (DE); Hübscher, Wilhelm, 89547, Heldenfingen (DE); Vetter, Harald, 89520 Heidenheim (DE); Hiemer, Gerhard, 90478 Nürnberg (DE); Schirmer, Edmund, 90409 Nürnberg (DE); Kilian, Hermann, 91456 Diespeck (DE); Bäumel, Hermann, 92318 Neumarkt i.d. Opf. (DE); George, Dietrich, 95445 Bayreuth (DE)
(74) Vertreter: Epping, Wilhelm

(56) Entgegenhaltungen:
- EP-A1- 0 616 401
- EP-A1- 0 994 494
- WO-A1-00/19788
- WO-A1-03/092023

## Beschreibung

Es wird ein Kondensator angegeben.

Ein Kondensator ist bekannt aus der Druckschrift EP 0 598 256 B1.

Die Druckschrift WO 03/092023 A1 zeigt ein Kondensatormodul, bei dem sich ein erster und ein zweiter Kondensator in jeweils getrennten, voneinander dicht abgeschlossenen metallisch leitfähigen Gehäusen befinden. Die beiden Gehäuse sind über eine Kontaktfläche miteinander verbunden, wobei eine interne elektrische Verschaltung zustande kommt.

Eine zu lösende Aufgabe besteht darin, einen Leistungskondensator anzugeben, der eine niedrige Induktivität aufweist. Die Erfindung, durch die diese Aufgabe gelöst wird, ist durch die Merkmale des Patentanspruchs 1 definiert.

Es wird ein Leistungskondensator angegeben, der einen Kondensatorwickel und ein Gehäuse aufweist. Der Kondensatorwickel kann beispielsweise in einer MPM-Schichtwickeltechnik ausgeführt sein. Als Dielektrikum für den Schichtwickel kommt beispielsweise Polyester, PEN, PPS oder auch Polypropylene in Betracht. Es kommen auch Flachwickel und Rundwickel in Betracht. Im Falle von Flachwickeln kommt es in Betracht, diese so auszuformen, dass ihre geometrische Form der eines Flachwickels entspricht. Auch die Verwendung einer Zusammenstellung mehrerer - z. B. nebeneinanderliegender - Rundwickel ist möglich.

In einer beispielhaften Ausführungsform kann ein Dielektrikum aus Polyester eine Dielektrizitätskonstante von 3,3 aufweisen. Ein Dielektrikum aus Polyester kann thermisch hoch stabil sein.

Es wird ein Leistungskondensator angeben, der zur Aufnahmen eines hohen elektrischen Stroms geeignet ist. Der maximale Strom kann vorzugsweise zwischen 50 und 300 Ampere betragen.

Die Nennspannung des Leistungskondensators beträgt vorzugsweise zwischen 150 und 600 Volt.

In dem Gehäuse des Kondensators können ein oder auch mehrere Kondensatorwickel vorgesehen sein, die zur Kapazität des Kondensators beitragen. Beispielsweise können zwei Kondensatorwickel mit jeweils einer Kapazität von einem Millifarad übereinander gestapelt werden und mittels einer Parallelschaltung zu einer Nennkapazität C_{Nenn} = 2mF verschaltet werden. Die Kapazität kann aber auch andere Werte annehmen.

Die Filmdicke des im Schichtwickel enthaltenen Dielektrikums beträgt vorzugsweise einige Mikrometer, besonders bevorzugt circa 3 µm. Dadurch kann eine besonders große Kapazität bei geringem Platzbedarf und dennoch ausreichender Spannungsfestigkeit erreicht werden.

In einer besonderen Ausführungsform des Leistungskondensators ist ein Kondensatorwickel vorgesehen, der an zwei Seitenflächen mit einer Schoopschicht versehen ist. Dabei kann es sich vorzugsweise um eine flamm- oder lichtbogengespritzte metallische Schicht handeln, die vorzugsweise Zink oder einen Schichtaufbau enthält. Ein möglicher Schichtaufbau enthält eine Schicht mit Zink und eine Schicht mit Kupfer.

Durch eine geeignete Wahl der Geometrien von Kondensatorwickel, Schoopschicht und Gehäuse kann eine Kapazität zwischen den Kondensatorelementen und dem Gehäuse (auch Belag-Gehäuse-Kapazität) eingestellt werden, die zur Entstörung eines Umrichters geeignet und die allgemein günstige Eigenschaften hinsichtlich EMV (Elektromagnetische Verträglichkeit) aufweist.

In einer Ausführungsform des Leistungskondensators ist es vorgesehen, dass ein Wickel kontaktiert wird mittels zwei auf gegenüberliegenden Seiten des Schichtwickels angeordneten Kontaktschichten. Diese Kontaktschichten können beispielsweise Schoopschichten sein.

In einer Ausführungsform des Leistungskondensators sind in dem Kondensatorgehäuse mehrere Kondensatorwickel enthalten, wobei die jeweils an einem gemeinsamen äußeren Pol anzuschließenden Kontaktschichten der einzelnen Wickel auf der selben Seite des Leistungskondensators liegen.

In einer Ausführungsform des Leistungskondensators erfolgt die Stromzuführung von Außenanschlüssen des Kondensators zu den Kondensatorwickeln über eine Bandleitung. Eine Bandleitung kann beispielsweise zusammengesetzt sein aus zwei einzelnen Stromschienen oder auch elektrisch leitfähigen Blechen. Vorzugsweise sind die elektrisch leitenden Bleche so gebildet, dass die Dicke des Blechs wesentlich geringer ist als die Ausdehnung des Blechs quer zur Dicke, dass heißt in Breiten- und Längsrichtung. Zwei solcher Stromschienen können in möglichst geringem Abstand übereinander gelegt werden und bilden so eine Bandleitung.

In einer besonderen Ausführungsform des Leistungskondensators ist es vorgesehen, dass zwischen den beiden elektrisch leitenden Blechen zusätzlich eine Isolierung vorgesehen ist. Des weiteren kann zwischen den leitenden Blechen noch ein weiterer elektrischer Leiter integriert sein, der mit den leitenden Blechen einen Y-Kondensator gegen Masse bildet.

Der weitere elektrische Leiter ist besonders bevorzugt mittels jeweils einer zwei- oder mehrlagigen Folienisolierung gegen die leitenden Bleche isoliert und mit Masse verbunden. Die zwei- oder mehrlagige Folienisolierung hat den Vorteil, dass insbesondere bei der Ausbildung des Y-Kondensators als nicht-selbstheilendem Kondensator für eine ausreichende Isolierung zwischen den leitenden Kondensatorelementen gesorgt werden kann.

Als Isolierung kommt beispielsweise ein Filmmaterial aus Polypropylen, Polycarbonat oder Polyester in Betracht, das vorzugsweise eine Filmdicke von 10 bis 100 µm aufweist. Die Isolierung kann auch zwei- oder mehrlagig sein, insbesondere im Fall von nicht - selbstheilenden Kondensatoren.

Gemäß einer anderen Ausführungsform des Leistungskondensators ist es vorgesehen, dass die Stromzufuhr von einem elektrischen Pol ausgehend von einem oder mehreren äußeren Anschlusselementen zu Kontaktflächen eines oder mehrerer Kondensatorwickel mittels einer Stromschiene bzw. mittels eines elektrisch leitfähigen Blechs erfolgt.

Die genannten Möglichkeiten der Stromzuführung zu den Schichtwickeln hat den Vorteil, dass die Eigeninduktivität des Leistungskondensators verringert werden kann.

Gemäß einer anderen Ausführungsform ist es vorgesehen, dass die Kontaktierung einer Kontaktfläche eines Wickels mittels einer Vielzahl von flexiblen Kontaktfingern erfolgt. Diese Kontaktfinger sind vorzugsweise so gebildet, dass sie in einer gemeinsamen Ebene verlaufen und zumindest in zwei zueinander senkrechten Richtungen jeweils eine hohe Flexibilität, das heißt eine hohe Elastizität aufweisen. In einer besonders bevorzugten Ausführungsform sind die Kontaktfinger aus einem Blech herausgestanzt.

Besonders bevorzugt erfolgt die elektrische Kontaktierung zwischen einem Kontaktfinger und einer Kontaktfläche eines Kondensatorwickels in einem Endbereich des Kontaktfingers, besonders bevorzugt am Ende des Kontaktfingers. Die Kontaktierung kann beispielsweise mittels Löten oder auch Schweissen erfolgen.

Gemäß einer anderen Ausführungsform ist es vorgesehen, dass die Kontaktfinger ausgestanzt sind aus einem Blechstreifen, der Teil eines gewinkelten Blechs ist. Ebenso ist eine Stromschiene bzw. ein elektrisch leitendes Blech Teil desselben gewinkelten Blechs. Der Blechstreifen, aus dem die hochflexiblen Kontaktfinger herausgestanzt sind, kann beispielsweise durch Abwinkeln eines Blechs hergestellt werden, wobei der nichtabgewinkelte Teil des Blechs für die Stromzuführung zum Kondensatorwickel verwendet wird und wobei der abgewinkelte Teil des Blechs durch Stanzen bearbeitet wird.

Gemäß einer anderen Ausführungsform kann es vorgesehen sein, dass ein doppelt abgewinkeltes Blech im Kondensator enthalten ist. Das zentrale Stück dieses Blechs bildet eine Stromschiene zur Bestromung von Kondensatorwickeln. Ein am einen Ende der Stromschiene abgewinkelter Teil wird zur Ausbildung von hochflexiblen Kontaktfingern verwendet. Am anderen Ende der Stromschiene, dass heißt auf der den Kontaktfingern gegenüberliegenden Seite der Stromschiene sind Kontaktbleche abgebogen, die auf der Außenseite des Leistungskondensators äußere Kontaktelemente bilden.

Die hochflexiblen Kontaktfinger können in einer ersten Ausführungsform des Kondensators als schmale Streifen geformt sein, die im wesentlichen geradlinig verlaufen.

In einer Ausführungsform des Kondensators sind die hochflexiblen Kontaktfinger so geformt, dass sie entlang einer mehrfach gekrümmten Bahn verlaufen. Beispielsweise können die Kontaktfinger entlang eines Mäanders verlaufen.

Besonders bevorzugt sind die Kontaktfinger mehrfach abgeknickt und zwar abwechselnd in unterschiedliche Richtungen. Gemäß einer anderen Ausführungsform ist es vorgesehen, dass mehrere hochflexible Kontaktfinger nebeneinander angeordnet sind und dabei von einem äußeren Rahmen gehalten werden. Besonders bevorzugt ragen abwechselnd Kontaktfinger vom unteren Ende des Rahmens und vom oberen Ende des Rahmens kommend in die Mitte der vom Rahmen umschlossenen Fläche.

In einer anderen Ausführungsform des Kondensators ist ein doppelt abgewinkeltes Blech vorgesehen, wobei die Basis dieses Blechs gebildet wird durch eine Stromschiene. An einem Ende an einer Längskante der Stromschiene ist ein abgewinkelter Teil vorgesehen, der zum Ausstanzen von hochflexiblen Kontaktfingern vorgesehen ist. In die gegenüberliegenden Richtung, an der selben Außenkante des Blechs, sind Kontaktelemente abgebogen, die zur Bildung von Außenkontakten des Kondensators dienen.

In einer anderen Ausführungsform des Leistungskondensators ist es vorgesehen, dass zwei Blechstreifen einander wenigstens teilweise überlappen, wobei jeder der Blechstreifen Teil eines gebogenen Blechs ist. Jeder der Blechstreifen ist auch als Stromschiene ausgebildet, das heißt, dass er zur Stromzuführung bzw. zur Bestromung von einem oder mehreren Kondensatorwickeln dient.

In einer anderen Ausführungsform des Kondensators ist es vorgesehen, dass leitend miteinander verbundene, hochflexible Kontaktfinger auf ein und derselben Seite des Kondensators mehrere Kondensatorwickel elektrisch leitend miteinander verbinden und so beispielsweise eine Parallelschaltung mehrerer Kondensatorwickel realisieren.

In einer anderen Ausführungsform wird durch die Kontaktfinger eine Reihenschaltung mehrerer Kondensatorwickel realisiert.

Die hochflexiblen Kontaktfinger sollten bezüglich ihrer mechanischen Flexibilität so gestaltet sein, dass sie einen elektrischen Kontakt zur Kontaktfläche eines Kondensatorwickels auch dann gewährleisten, wenn dieser sich beispielsweise durch Erwärmung oder bei mechanischer Belastung in einem Kraftfahrzeug bewegt, wobei die elektrisch leitende Verbindung bzw. Lötstelle zwischen Kontaktfinger und Kontaktfläche mechanisch belastet wird. Dadurch kann die Vibrationsfestigkeit des Bauelements verstärkt werden.

Gemäß einer anderen Ausführungsform des Kondensators sind die Blechstreifen, die zur Herstellung von Kontaktfingern dienen, die Blechabschnitte, die die Außenkontakte bilden sowie die Blechabschnitte, die Teil einer Bandleitung sind, nicht Bestandteil eines durch Biegen verformten Blechs, sondern sie können auch Bestandteil einer Verschalteinheit bzw. Bestromungseinheit sein. Die einzelnen Bestandteile einer Verschalteinheit sind durch Verschweißen, Verlöten oder durch andere geeignete Prozesse zur Verbindung mehrer separater Teile zu einer mechanisch stabilen Einheit zusammengefügt.

Um die Eigeninduktivität des Kondensators zu reduzieren ist es vorteilhaft, wenn die Bandleitung so angeordnet und beschaltet ist, dass sie von Strömen in entgegengesetzter Richtung durchflossen wird, sobald der Kondensator von Außen bestromt wird.

In einer Ausführungsform des Kondensators sind mehrere Außenanschlüsse vorgesehen. Dabei bilden jeweils zwei Außenanschlüsse ein Anschlusspaar, wobei ein erster Anschluss des Anschlusspaares einer ersten Polarität und ein zweiter Anschluss des Paares einer zweiten Polarität zugeordnet ist. Die Zuordnung eines Anschlusses zu einer Polarität ist nicht dahingehend zu verstehen, dass hiermit der Wechselstrombetrieb ausgeschlossen wäre. Vielmehr bedeutet die Zuordnung eines Außenanschlusses zu einer Polarität letztlich die Zuordnung eines Außenschlusses zu einem Kontakt bzw. zu einer Fläche mit einheitlichem elektrischen Potential im Kondensator, welches beispielsweise eine Anschlussfläche eines Kondensatorelements sein kann. Besonders bevorzugt sind drei Paare von Außenkontakten vorgesehen.

In einer besonderen Ausführungsform des Kondensators ist bei jedem Außenkontakt eine Einteilung in einen oberen und einen unteren Teil des Außenkontakts vorgesehen. Die unteren Teile der Außenkontakte, die zu einem Paar von Außenkontakten gehören, überlappen dabei einander und sind besonders bevorzugt elektrisch gegeneinander isoliert. Diese unteren Teile der Außenkontakte bilden somit eine Bandleitung und werden im folgenden auch als Schultern der Außenkontakte bezeichnet. Von einer Schulter eines Außenkontakts ragt im oberen Bereich des Außenkontakts die Kontaktlasche nach Außen. Die Kontaktlaschen eines Paares von Außenkontakten liegen dabei in einer Draufsicht gesehen nebeneinander.

Diese Ausführungsform der Kontaktlaschen hat den Vorteil, dass eine Kontaktierung der Kontaktlasche durch Durchstecken eines elektrisch leitenden Elementes, beispielsweise durch Durchstecken eines elektrisch leitenden Bolzens oder auch einer elektrisch leitenden Schraube durch ein Loch der Kontaktlasche erfolgen kann. Indem die Kontaktlaschen in einer Draufsicht nebeneinander angeordnet sind, kann für eine sichere Isolierung der Kontaktlaschen untereinander und auch für eine sichere Isolierung der zu einer Kontaktlasche gehörenden Kontaktelemente zur weiteren Kontaktierung gesorgt werden.

Besonders bevorzugt sind zur Beschaltung des Leistungskondensators drei Paare von Außenkontakten vorgesehen. Dies hat den Vorteil, dass ein solcher Leistungskondensator besonders einfach zur Beschaltung eines Umrichters verwendet werden kann, wobei jeder der drei in einem Umrichter enthaltenen IGBT-Module (Insulatet Gate Bipolar Transistor) an ein Paar von Außenkontakten angeschlossen wird.

Die Verwendung mehrerer Paare von Außenkontakten zur Beschaltung des Kondensators hat darüber hinaus den Vorteil, dass sich der zur Bestromung vorgesehene Strom auf drei verschiedene, vorzugsweise maximal voneinander beabstandete Kontaktstellen verteilt und somit zusätzlich eine weitere Reduktion der Eigeninduktivität des Kondensators erreicht werden kann.

Besonders bevorzugt sind die Paare von Kontaktelementen jedoch in einer Reihe angeordnet.

Als Material für die Verschaltstreifen bzw. die Verschalteinheiten kann beispielsweise Kupfer verwendet werden. Als Blechstärke kommt vorzugsweise 0,5 bis 5 mm in Betracht.

In einer besonders bevorzugten Ausführungsform des Kondensators ist es vorgesehen, dass das Gehäuse die Form einer Wanne hat, wobei die Wanne einen Boden und beispielsweise vier Seitenwände sowie ein offenes oberes Ende aufweist. An den Seitenflächen der Wanne können Montageösen bzw. Montageelemente vorgesehen sein, mit deren Hilfe der Leistungskondensator an ein weiteres elektronisches Element montiert werden kann. Auf der Oberseite des Gehäuses kann auch eine umlaufende Nut zur Aufnahme eines Dichtungsrings vorgesehen sein.

Zur Fixierung eines Kondensatorwickels im Gehäuse kann eine isolierende Schale vorgesehen sein, die - gewissermaßen als zweite Wanne - in den unteren Bereich des Gehäuses eingelegt wird. In die isolierende Wanne wird anschließend der Kondensatorwickel eingelegt. Zum isolierenden Abschluss des Kondensators zum offenen Ende des Gehäuses hin wird eine zweite isolierende Schale auf der Oberseite aufgelegt.

In einer bevorzugten Ausführungsform ergänzen sich die untere und die obere Schale zu einem weitgehend geschlossenen Gehäuse.

Gemäß einer besonderen Ausführungsform des Kondensators kann es vorgesehen sein, dass die obere Schale Öffnungen aufweist, durch die die äußeren Kontaktelemente, bzw. Paare von Kontaktelementen hindurch ragen können. An den Öffnungen der oberen Schale können elektrisch isolierende Krägen angeordnet sein, die zur Isolierung der äußeren Kontaktelemente dienen.

In einer besonders bevorzugten Ausführungsform des Kondensators ist auf der Oberseite eine Kühlfläche vorgesehen, die zum Kühlen des Kondensators dienen kann. Eine solche Kühlfläche kann besonders bevorzugt gebildet werden durch einen Blechstreifen bzw. eine Bandleitung, der Teil der Verschalteinheit des Kondensators ist. Vorzugsweise wird der Strom über Blechstreifen bzw. eine Bandleitung zu den Kondensatorwickeln geleitet. Beispielsweise kann das Obere von zwei elektrisch leitenden Blechen als Kühlelement verwendet werden. Durch eine geeignete Ausbildung der Verschalteinheit kann dafür Sorge getragen werden, dass das Obere der elektrisch leitenden Bleche hinreichend gut mit der oberen Kante des Gehäuses abschließt, womit für einen guten mechanischen Kontakt, bevorzugt für einen guten thermomechanischen Kontakt des oberen Blechs zu einem auf der Oberseite zu montierenden weiteren Gehäuse - das z. B. eine Kühlplatte bereitstellt - gesorgt werden kann.

Um die Gefahr eines Kurzschlusses zu reduzieren, ist es vorteilhaft, wenn auf der Oberfläche des Kühlelementes noch eine elektrische Isolation angeordnet ist. Beispielsweise kann eine solche Isolation gebildet sein durch eine durchsichtige Isolierstofffolie, die nur wenige Mikrometer dick ist und somit den Wärmetransport nur unwesentlich behindert. In einer anderen Ausführungsform wird die elektrische Isolation durch die obere von zwei Isolierschalen gewährleistet, wobei die Wärmeleitung dadurch hergestellt wird, dass die Wandstärke der Isolierschale ausreichend dünn gewählt wird. Die Wandstärke kann beispielsweise 0,3 mm betragen.

Es wird darüber hinaus ein elektrisches Modul beschrieben, wobei eine erste Einheit des Moduls ein elektronisches System betrifft, das z. B. IGBT-Module enthält. Allgemein kann die erste Einheit eine elektrische Vorrichtung für die Leistungselektronik sein. Eine weitere Einheit des Moduls ist der hier beschriebene Kondensator. Vorzugsweise ist die Oberseite des Kondensators bzw. des Gehäuses des Kondensators flächig verbunden mit der Unterseite der ersten Einheit. Die Außenkontakte des Kondensators ragen dabei in das Gehäuse der ersten Einheit und sind dort, beispielsweise mittels Verschraubung, mit den dort befindlichen IGBTs verbunden. Die erste Einheit muss nicht notwendigerweise IGBTs enthalten, sie kann auch andere elektronische Bauelemente oder auch mechanische Bauelemente enthalten.

Vorzugsweise ist die Unterseite der ersten Einheit, das heißt die Seite der ersten Einheit, die mit dem Kondensator in Kontakt steht, mit einer Vorrichtung zur Wärmeabführung ausgestattet. Eine solche Vorrichtung kann beispielsweise eine mit Löchern versehene Metallplatte sein. Eine solche Vorrichtung kann aber auch in Form von Kühlrippen ausgestaltet sein.

Vorzugsweise besteht ein guter flächiger Kontakt zwischen der oberen Stromschiene der Stromzuführeinheit im Kondensator und der Kühlvorrichtung der ersten Einheit. Dadurch kann in vorteilhafter Weise im Kondensator entstehende Wärme gut nach außen abgeführt werden. In einer Ausführungsform des Kondensators wird die Oberseite des Kondensators gebildet durch eine dünne Isolierfolie, die nur einen geringen Wärmewiderstand hat und somit für einen guten Wärmetransport vom Kondensator zur ersten Einheit des elektronischen Moduls sorgt.

Es wird darüber hinaus ein Modul der Leistungselektronik gemäß weiterer Aspekte wie folgt beschrieben. Um die Bezugnahme auf ausgewählte Aspekte zu vereinfachen, sind die einzelnen Aspekte nummeriert.
1. Modul der Leistungselektronik,
   - mit einem Kondensator enthaltend ein wannenförmiges Gehäuse mit wenigstens einem Kondensatorwickel
   - und mit einer elektronischen Einheit, an deren Bodenbereich der Kondensator montiert ist,
   - wobei am Boden der elektronischen Einheit eine Kühlplatte vorgesehen ist, die in Wärmekontakt mit einer Kühlfläche des Kondensators steht, welche durch eine Stromschiene gebildet ist.
2. Modul nach Aspekt 1,
   wobei auf der der elektrischen Einheit zugewandten Seite der Kühlfläche eine elektrische Isolierfolie angeordnet ist.
3. Modul nach einem der Aspekte 1 bis 2, das IGBTs enthält.

Die hier beschriebenen Gegenstände werden im folgenden anhand von Figuren näher erläutert.
- Figur 1: zeigt einen Kondenstor in einer perspektivischen Ansicht.
- Figur 2: zeigt beispielhaft die umhausende Schale des Kondensators aus Figur 1.
- Figur 3: zeigt zwei Bestromungseinheiten für den Kondensator aus Figur 1 in einer perspektivischen Ansicht.
- Figur 3A: zeigt Stromschienen im Querschnitt.
- Figur 4: zeigt die Bestromungseinheiten als Konstruktionszeichnung.
- Figur 5: zeigt den oberen Teil einer Isolierschale als Konstruktionszeichnung.
- Figur 6: zeigt den unteren Teil einer Isolierschale als Konstruktionszeichnung.
- Figur 7: zeigt ein elektrisches Modul in einem schematischen Querschnitt.
- Figuren 8 und 9: zeigen Ersatzschaltbilder von Kondensatoren.

Die in den Figuren angegebenen Maßangaben sind lediglich beispielhaft zu verstehen. Sie schränken die hier beschriebenen Gegenstände nicht ein. Gleich Elemente oder Elemente mit der gleichen Funktion sind mit gleichen Bezugszeichen bezeichnet.

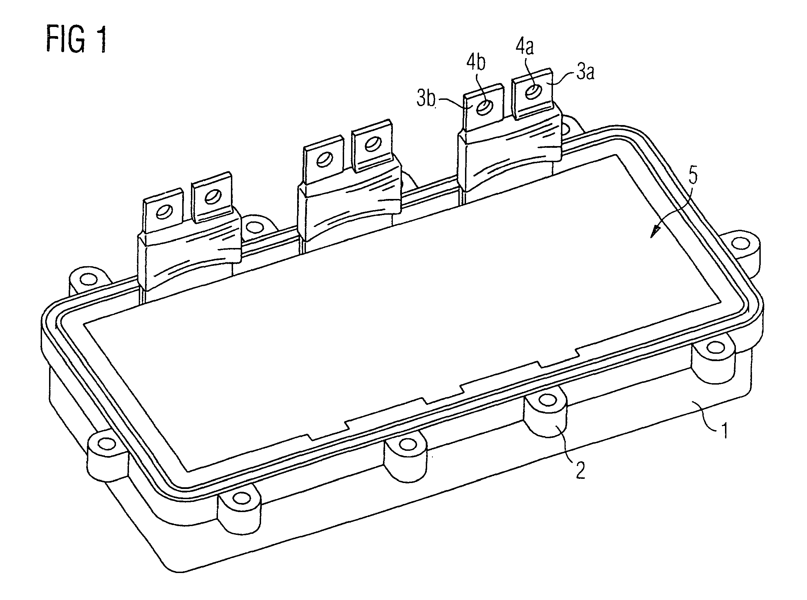

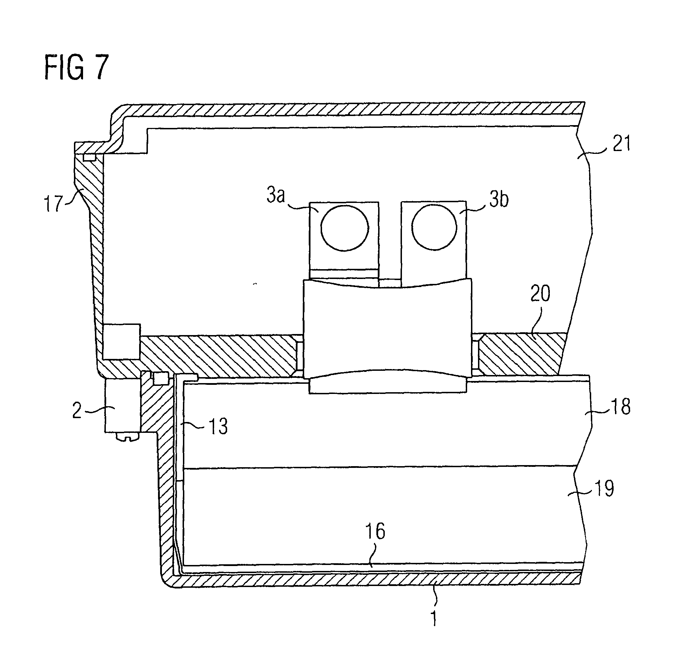

Figur 1 zeigt einen Kondensator mit einem Gehäuse 1, an dessen Oberseite in Umfangsrichtung mehrere Montageösen 2 angeordnet sind. Mit Hilfe der Montageösen 2 kann der Kondensator an eine weitere elektronische Einheit montiert werden. Eine solche Einheit ist beispielsweise in Figur 7 gezeigt.

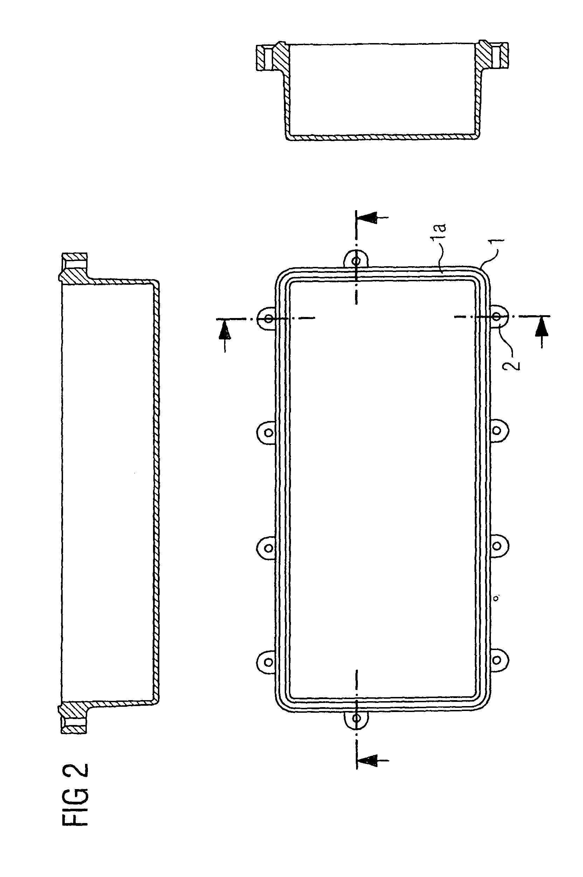

Figur 2 zeigt das Gehäuse als Konstruktionszeichnung. Das Gehäuse 1 kann beispielsweise aus Aluminium bestehen oder Aluminium enthalten. Die Länge des Gehäuses beträgt in etwa 25 cm. Die Breite des Gehäuses beträgt cirka 12 cm. Am Umfang des Gehäuses sind 10 Montageösen angeordnet. Die Anzahl der Montageösen kann aber variieren, je nachdem wie groß das Gehäuse ist und welche mechanische Stabilität für die Anbindung des Gehäuses an eine weitere elektronische Einheit gefordert wird. Die Tiefe des wannenförmigen Gehäuses beträgt etwa 6 cm. Auf der Oberseite des Gehäuses ist eine umlaufende Nut 1a angeordnet, die zur Aufnahme einer Dichtmasse beziehungsweise eines Dichtrings dient.

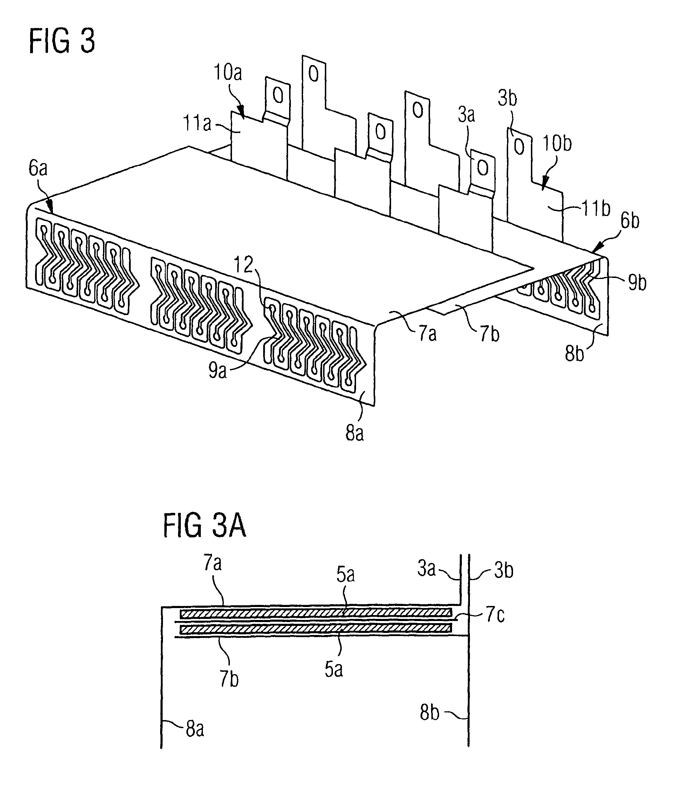

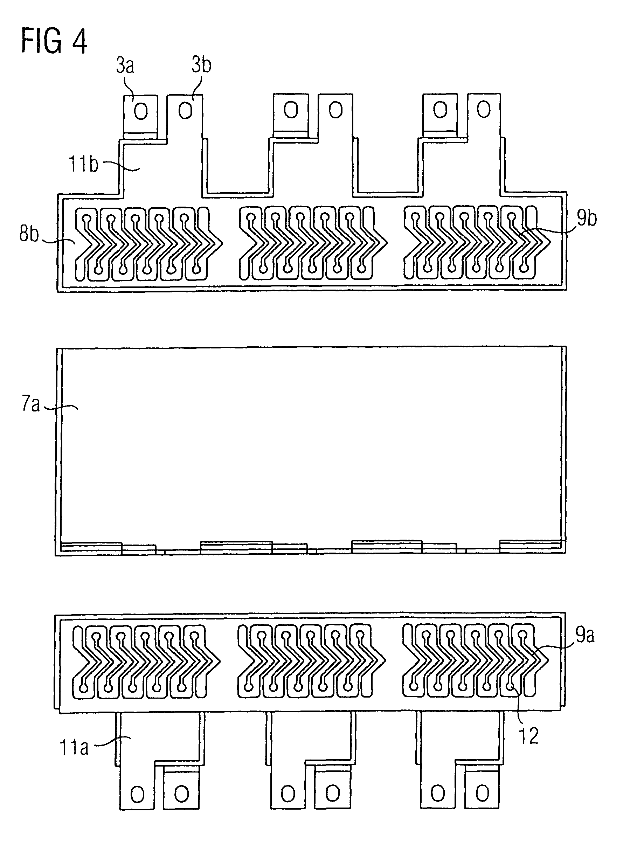

Die Figuren 3 und 4 zeigen zwei Bestromungseinheiten 6a, 6b. Die Stromschienen 7a beziehungsweise 7b sind zentraler Bestandteil der Bestromungseinheiten 6a, 6b. Die Stromschienen 7a, 7b überlappen einander weitgehend, wobei zwischen den beiden Stromschienen noch eine Isolierung 5a angeordnet ist. Die Isolierung 5 a wird ggf. mehrlagig ausgeführt. Die Isolierung 5a bildet zusammen mit den Stromschienen 7a, 7b eine Bandleitung. Die Stromschienen sind als busbar ausgebildet.

Als Bestandteil der Bestromungseinheit 6a ist von der Stromschiene 7a nach unten weg ein Kontaktierungsblech 8a abgebogen, bei dem, beispielsweise durch Ausstanzen, Kontaktfinger 9a hergestellt sind. Am Ende der Kontaktfinger befindet sich jeweils der Lötbereich 12 zum Anlöten der Kontaktfläche eines Kondensatorwickels. Ähnlich wie bei der Stromschiene 7a ist auch bei der Stromschiene 7b auf der gegenüberliegenden Seite des Kontaktierungsblechs 8a ein Kontaktierungsblech 8b nach unten weggebogen.

Die Kontaktierungsbleche 8a, 8b müssen nicht notwendigerweise durch Biegen eines Blechs hergestellt sein. Sie können auch als separates Teil an die jeweilige Stromschiene befestigt sein. Auf der rechten Seite in Figur 3A beziehungsweise im oberen Bereich von Figur 3 ist zu erkennen, dass in diesem Bereich nach oben stehende Kontaktbleche vorgesehen sind. Für jede Stromschiene sind dabei drei Kontaktbleche vorgesehen. Die Anzahl der Kontaktbleche kann aber auch erhöht oder erniedrigt werden, je nach Anwendung des Kondensators. Wichtig für die Erniedrigung der Induktivität des Kondensators ist, dass die Bestromung mittels einer Stromschiene erfolgt, die eine niederinduktive Verteilung des Stroms über eine große Fläche zulässt.

Die nach oben stehenden Kontaktbleche 10a, 10b weisen dabei im unteren Bereich einen Schulterbereich 11a, 11b auf, wobei entsprechende Kontaktbleche, das heißt, Kontaktbleche, die ein Paar von Außenkontakten bilden, überlappende, vorzugsweise als busbar ausgebildete Schulterbereiche 11a, 11b aufweisen. Nicht mehr überlappend sind dann die sich an die Schulterbereiche anschließenden Außenanschlüsse 3a, 3b, da diese in einer bevorzugten Ausführungsform des Kondensators mittels eines Lochs 4a, 4b weiter kontaktiert werden.

In Figur 3A ist eine weitere Stromschiene 7c zu erkennen, die zwischen der Stromschiene 7a und der Stromschiene 7b elektrisch isoliert davon angeordnet ist. Die Stromschiene 7c wird vorzugsweise mit der masse kontaktiert. Die Isolierung erfolgt mit den Isolierschichten 5a. Zwar sind die Isolierschichten einlagig dargestellt, sie können jedoch besonders bevorzugt zwei- oder sogar mehrlagig ausgeführt sein. Insbesondere kann die Isolierung mittels mehrlagiger Isolierfolien erfolgen. Mit Hilfe einer solchen zusätzlichen Stromschiene kann in einer bevorzugten Ausführungsform des Kondensators eine Y-Kapazität des Kondensators zum Gehäuse hin realisiert werden.

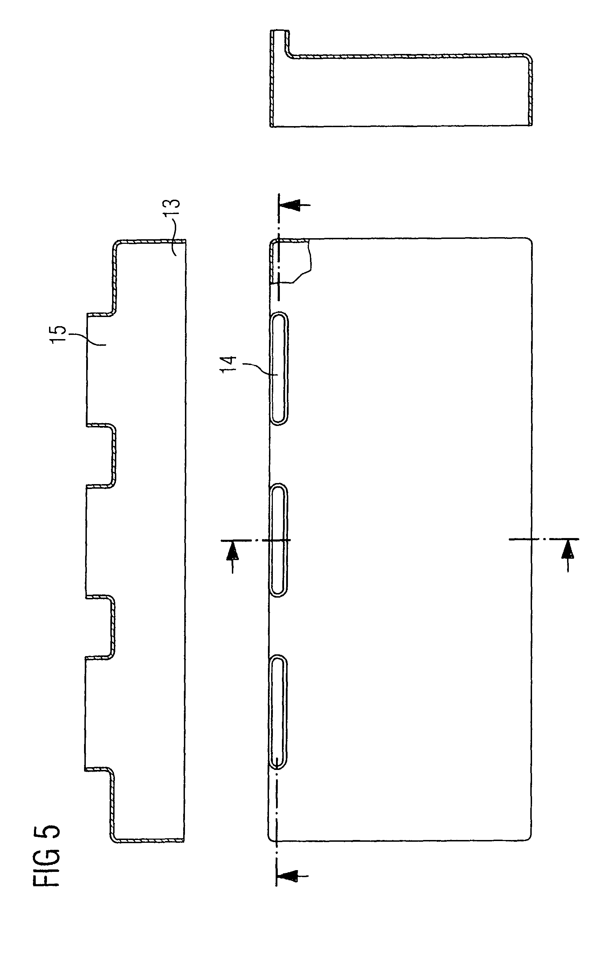

Die Figur 5 zeigt den oberen Teil einer isolierenden Schale, die zwischen dem oder den Kondensatorwickeln und dem Gehäuse des Kondensators angeordnet werden kann. Die Schale besteht vorzugsweise aus isolierendem Material, zum Beispiel Polycarbonat oder PP mit einer bevorzugten Dicke von 0,3 bis 0,5 mm. Die obere Halbschale 13 ist so geformt, dass sie quasi als Deckel über den Kondensatorwickel gelegt werden kann. Sie ist mit Langlöchern 14 versehen, durch die die Außenkontakte der Stromzuführungselemente hindurchragen können. Im Bereich der Löcher 14 können bevorzugt Krägen 15 angeordnet sein, die den unteren Bereich der Außenanschlüsse isolieren.

Die Wandstärke der oberen Halbschale 15 sollte zumindest im oberen (Deckel-)Bereich relativ dünn sein, um eine gute Kühlung von der Oberseite des Kondensators her zu gewährleisten.

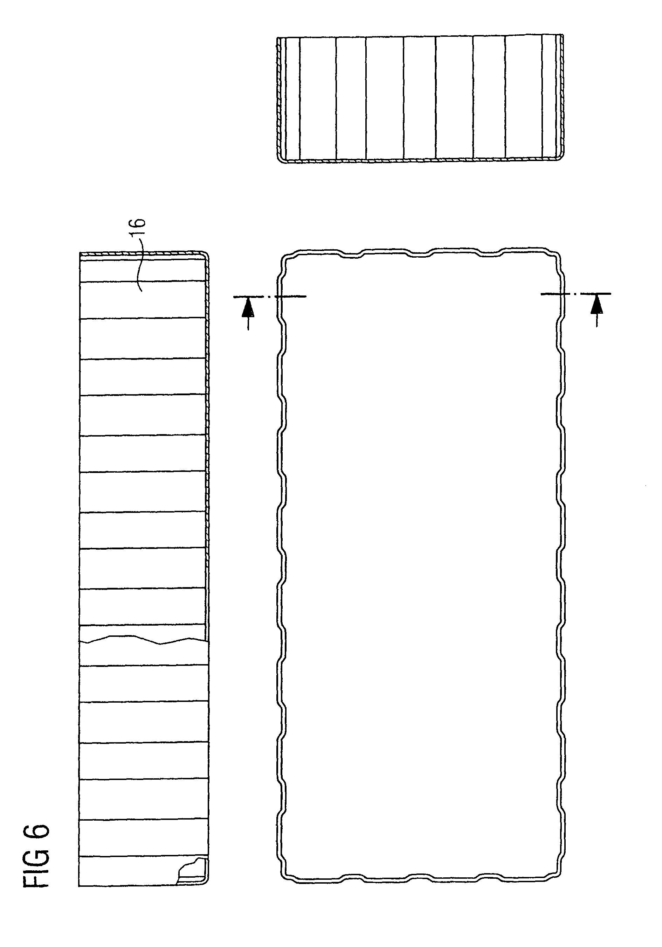

Figur 6 zeigt eine untere Halbschale 16, die vorzugsweise vor dem Einlegen der Kondensatorwickel in das Gehäuse eingelegt wird. Sie ist wie die obere Halbschale 13 vorzugsweise aus isolierendem Material gefertigt.

Figur 7 zeigt einen Kondensator als Bestandteil einer elektronischen Einheit, die beispielsweise ein Umrichter sein kann. Die elektronische Einheit 21 enthält dabei in einem Gehäuse 17 mehrere IGBT-Module. Auf der Unterseite des Gehäuses 17 ist ein Kondensator angeordnet, der beispielsweise durch Verschrauben mittels der Montageösen 2 an dem Gehäuse 17 befestigt ist.

Durch Löcher im Gehäuse 17 ragen die Außenanschlüsse 3a beziehungsweise 3b in das Innere der elektronischen Einheit 21. An der Unterseite des Gehäuses 17 ist eine Kühlplatte 20 vorgesehen, die zum Abtransport von Wärme geeignet ist. Die Unterseite der Kühlplatte 20 steht dabei in direktem thermischen Kontakt mit den Elementen des Kondensators, insbesondere mit der den oberen Abschluss des Kondensators bildenden Oberseite der oberen Halbschale gemäß Figur 5. Die Oberseite des Kondensators kann aber auch gebildet werden durch eine durchsichtige isolierende Folie 5 gemäß Figur 1, insbesondere für den Fall, dass die Kondensatorwickel durch einen Verguss in dem Gehäuse des Kondensators gehalten werden.

In Figur 7 wird die Kapazität des Kondensators im wesentlichen gebildet durch zwei Kondensatorwickel 18, 19, die übereinander in das Gehäuse eingelegt sind. Zwischen den Kondensatorwickeln und dem Gehäuse 1 des Kondensators ist noch eine isolierende Halbschale 16 in Form einer unteren Halbschale angeordnet.

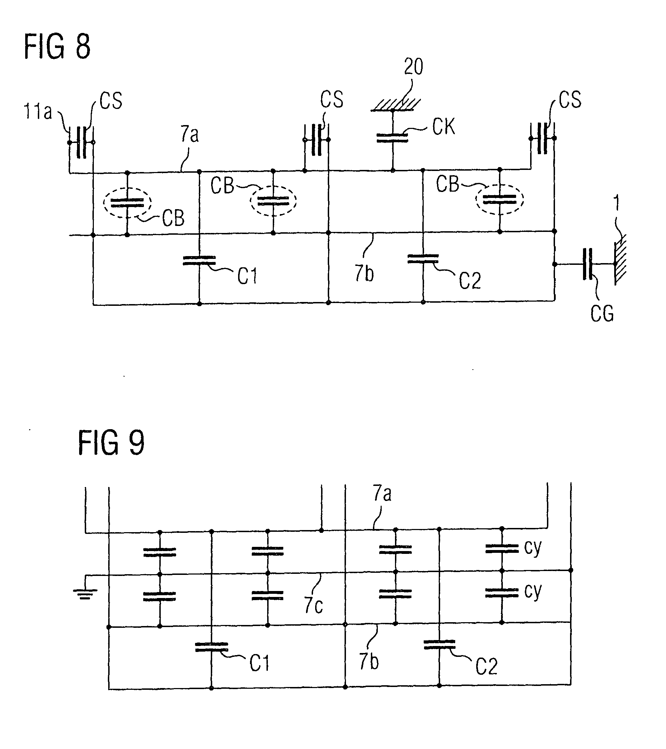

Figur 8 zeigt in einem Ersatzschaltbild zum einen die Hauptkapazitäten des Kondensators C1, C2 für den Fall, dass zwei Kondensatorwickel verwendet werden. Die Kapazitäten CB repräsentieren die Kapazität der Bandleitung. Die Kapazitäten CS repräsentieren die Kapazitäten der gegenüber liegenden Schulterfläche der Außenanschlüsse des Kondensators. Die

Kapazität CG repräsentiert dabei die Kapazität der Bandleitungen gegenüber dem Gehäuse 1. Die Kapazität CK repräsentiert die Kapazität der oberen Stromschiene zur Kühlplatte 20.

Figur 9 zeigt ein Ersatzschaltbild entsprechend Figur 8 für den Fall, dass ein weiterer elektrischer Leiter gemäß Figur 3A vorgesehen ist. Es bildet sich eine Y-Kapazität aus, die der Deutlichkeit wegen als verteilte Kapazität CY dargestellt ist. Die weitere Stromschiene 7c ist mit Masse kontaktiert.

### Bezugszeichenliste

- 1: Gehäuse
- 1a: Vertiefung
- 2: Montageöse
- 3a: Außenanschluss der ersten Polarität
- 3b: Außenanschluss der zweiten Polarität
- 4a, 4b: Kontaktlöcher
- 5: Isolierfolie
- 5a: Isolierschicht
- 6a, 6b: erste, zweite Bestromungseinheit
- 7a, 7b, 7c: Stromschienen
- 8a, 8b: Kontaktierungsblech
- 9a, 9b: Kontaktfinger
- 10a, 10b: Kontaktblech
- 11a, 11b: Schulterblech
- 12: Lötbereich
- 13: Obere Halbschale
- 14: Langloch
- 15: Kragen
- 16: untere Halbschale
- 17: Gehäuse
- 18, 19: Kondensatorwickel
- 20: Kühlplatte
- 21: Elektronische Einheit
- C1, C2: Kapazität
- CB: Kapazität der Bandleitung
- CS: Kapazität der Schultern
- CG: Kapazität Bandleitung/Gehäuse
- CK: Kapazität Bandleitung/Kühlplatte
- CY: Y-Kapazität

## Patentansprüche

1. Kondensator mit einem Gehäuse (1) und einem oder mehreren Kondensatorwickeln (18, 19),
wobei die Kontaktierung der Kondensatorwickel (18, 19) mittels Kontaktfingern (9a, 9b) erfolgt, die in zwei zueinander orthogonalen Richtungen elastisch sind, und wobei die Kontaktfinger (9a, 9b) Teil eines Blechstreifens sind, der zudem eine Stromschiene (7a, 7b, 7c) zur Bestromung der Kondensatorwickel (18, 19) bildet.

2. Kondensator nach Anspruch 1,
der zur Aufnahme eines elektrischen Stroms zwischen 50 und 300 Ampere geeignet ist.

3. Kondensator nach einem der Ansprüche 1 oder 2,
bei dem mehrere Kondensatorwickel (18, 19) mittels Stromschienen (7a, 7b, 7c) verschaltet sind.

4. Kondensator nach einem der vorhergehenden Ansprüche,
bei dem ein Kondensatorwickel (18, 19) mittels zwei auf gegenüberliegenden Seiten des Wickels angeordneten Kontaktschichten bestromt wird.

5. Kondensator nach einem der vorhergehenden Ansprüche,
bei dem mehrere Stromschienen (7a, 7b, 7c) eine Bandleitung bilden.

6. Kondensator nach Anspruch 5,
bei dem zwischen zwei Stromschienen (7a, 7b) ein weiterer elektrischer Leiter (7c) angeordnet ist zur Bildung eines Y-Kondensators.

7. Kondensator nach Anspruch 5,
bei dem die Bandleitung eine Isolierschicht (5a) mit einer Dicke zwischen 10 und 100 µm enthält.

8. Kondensator nach einem der vorhergehenden Ansprüche,
bei dem eine Stromschiene (7a, 7b, 7c) eine im wesentlichen freiliegende Kühlfläche in einem Randbereich des Kondensators bildet.

9. Kondensator nach einem der vorhergehenden Ansprüche,
bei dem die Kontaktfinger (9a, 9b) aus einem Blech herausgestanzt sind.

10. Kondensator nach einem der vorhergehenden Ansprüche,
bei dem die Kontaktierung zwischen einem Kontaktfinger (9a, 9b) und einer Kontaktfläche eines Kondensatorwickels (18, 19) in einem Endbereich des Kontaktfingers (9a, 9b) erfolgt.

11. Kondensator nach einem der vorhergehenden Ansprüche,
wobei die Kontaktfinger (9a, 9b) entlang einer mehrfach geknickten Bahn verlaufen.

12. Kondensator nach einem der Ansprüche 6 bis 11,
bei dem der weitere elektrische Leiter (7c) gegenüber den Stromschienen (7a, 7b) durch jeweils eine zwei- oder mehrlagige Folienisolierung isoliert ist.

## Claims

1. Capacitor comprising a housing (1) and one or more capacitor coils (18, 19), wherein contact is made with the capacitor coils (18, 19) by means of contact fingers (9a, 9b), which are elastic in two directions orthogonal to one another, and wherein the contact fingers (9a, 9b) are part of a sheet-metal strip, which additionally forms a busbar (7a, 7b, 7c) for energizing the capacitor coils (18, 19).

2. Capacitor according to Claim 1, which is suitable for drawing an electric current between 50 and 300 amperes.

3. Capacitor according to either of Claims 1 and 2, in which a plurality of capacitor coils (18, 19) are interconnected by means of busbars (7a, 7b, 7c).

4. Capacitor according to one of the preceding claims, in which a capacitor coil (18, 19) is energized by means of two contact layers arranged on opposite sides of the coil.

5. Capacitor according to one of the preceding claims, in which a plurality of busbars (7a, 7b, 7c) form a stripline.

6. Capacitor according to Claim 5, in which a further electrical conductor (7c) is arranged between two busbars (7a, 7b) so as to form a Y capacitor.

7. Capacitor according to Claim 5, in which the stripline contains a layer of insulation (5a) with a thickness of between 10 and 100 µm.

8. Capacitor according to one of the preceding claims, in which a busbar (7a, 7b, 7c) forms a substantially exposed cooling area in a peripheral region of the capacitor.

9. Capacitor according to one of the preceding claims, in which the contact fingers (9a, 9b) are stamped out of a metal sheet.

10. Capacitor according to one of the preceding claims, in which contact is made between a contact finger (9a, 9b) and a contact area of a capacitor coil (18, 19) in an end region of the contact finger (9a, 9b).

11. Capacitor according to one of the preceding claims, wherein the contact fingers (9a, 9b) extend along a path with multiple bends.

12. Capacitor according to one of Claims 6 to 11, in which the further electrical conductor (7c) is insulated from the busbars (7a, 7b) in each case by two-layered or multilayered film insulation.

## Revendications

1. Condensateur comprenant un boîtier (1) et un ou plusieurs bobinages de condensateur (18, 19),
la mise en contact des bobinages de condensateur (18, 19) s'effectuant au moyen de languettes de contact (9a, 9b) qui sont flexibles dans deux directions orthogonales l'une par rapport à l'autre, et les languettes de contact (9a, 9b) faisant partie d'une bande de tôle qui forme, en plus de cela, une barre-bus (7a, 7b, 7c) pour l'alimentation électrique des bobinages de condensateur (18, 19).

2. Condensateur selon la revendication 1, lequel est conçu pour absorber un courant électrique compris entre 50 et 300 ampères.

3. Condensateur selon l'une des revendications 1 ou 2, avec lequel plusieurs bobinages de condensateur (18, 19) sont interconnectés à l'aide de barres-bus (7a, 7b, 7c).

4. Condensateur selon l'une des revendications précédentes, avec lequel un bobinage de condensateur (18, 19) est alimenté électriquement à l'aide de deux couches de contact disposées sur des côtés opposés du bobinage.

5. Condensateur selon l'une des revendications précédentes, avec lequel plusieurs barres-bus (7a, 7b, 7c) forment un conducteur plat.

6. Condensateur selon la revendication 5, avec lequel un conducteur électrique (7c) supplémentaire est disposé entre deux barres-bus (7a, 7b) en vue de former un condensateur en Y.

7. Condensateur selon la revendication 5, avec lequel le conducteur plat contient une couche isolante (5a) ayant une épaisseur comprise entre 10 et 100 µm.

8. Condensateur selon l'une des revendications précédentes, avec lequel une barre-bus (7a, 7b, 7c) forme une surface de refroidissement pour l'essentiel à découvert dans une zone périphérique du condensateur.

9. Condensateur selon l'une des revendications précédentes, avec lequel les languettes de contact (9a, 9b) sont découpées dans une tôle.

10. Condensateur selon l'une des revendications précédentes, avec lequel la mise en contact entre une languette de contact (9a, 9b) et une surface de contact d'un bobinage de condensateur (18, 19) s'effectue dans une zone d'extrémité de la languette de contact (9a, 9b).

11. Condensateur selon l'une des revendications précédentes, avec lequel les languettes de contact (9a, 9b) s'étendent le long d'une trajectoire plusieurs fois coudée.

12. Condensateur selon l'une des revendications 6 à 11, avec lequel le conducteur électrique (7c) supplémentaire est isolé par rapport aux barres-bus (7a, 7b) à chaque fois par un film isolant à deux couches ou plus.
